# EUROPEAN PATENT APPLICATION

(11) **EP 2 767 792 A2**
(43) Date of publication of application: **20.08.2014**
(21) Application number: 13464010.1
(22) Date of filing: 19.08.2013
(51) Int. Cl.: F28F 9/18, B23K 3/06, F24H 1/14, F28F 21/06, F28F 21/08, F28D 7/16, F28F 1/32

(54) **Heat exchanger and process of realizing thereof**

(30) Priority: 14.02.2013 RO 201300152
(71) Applicant: S.C. Kober Srl, 617410 Jud. Neamt (RO)
(72) Inventor: Kober, Aurel, 610053 Neamt (RO)
(74) Representative: Turcanu, Constantin

(57) **Abstract**

The invention refers to a gas-liquid heat exchanger and to the process of realizing thereof, used for preparing the thermal agent necessary for heating and producing domestic hot water, used for wall hung gas boilers.

According to the invention, the heat exchanger is formed of two parts, a metal part A, figure 1, which ensures the thermal exchange, and a collection and connection part with the gas boiler B, which can be made of metal or composite plastic.

Part A is made of straight pipes, which ensure the circulation of the thermal agent provided by a gas boiler, some flaps, the ends of the pipes being each fixed to a collector assembly, all assembled in one part by brazing.

## Description

The invention refers to a gas-liquid heat exchanger and to the process of realizing thereof, exchanger aimed to the heat thermal transmission from a primary environment, combustion fuel, hot flue gas supplier or from another source of hot gas, to a secondary environment, liquid, used for preparing the thermal agent necessary for heating and producing domestic hot water or for heating a passenger compartment, heat exchanger that can be used for wall hung boilers mainly with normal combustion, but which by overlapping and sealing of the heating chamber can be extended to the condensing boilers as well.

The heat exchanger, according to the invention, is composed of a series of straight metal ducts, each end of them being assembled to an independent collector assembly, common to the ducts, which ensures the circulation of the liquid thermal agent that has taken over the heat from the primary environment, through the ducts, to directions successively opposed, ensuring a long circuit of the fluid, respectively, ensuring a high heat exchange and of a series of metal flaps attached to the ducts, all the elements being made of steel, preferably, stainless steel.

All metal elements are assembled between them by controlled atmosphere furnace brazing.

The flaps, due to their geometrical shape, follow the conduct of hot gas on the drain line which should wash as good as possible the ducts that compose the exchanger and should break the gas stream into streams with 3-4 mm thickness, directed in the near vicinity of the ducts of the exchanger, the result being the improvement of the thermal transmission.

The solder is in the form of a paste and is applied on the surface of the ducts using multiple syringes, by cut-outs especially made on the flaps, so that, due to the capillarity, the melted alloy will fill only the clearance formed between the ducts and the flanging of the flaps due to the thermal extension.

The flaps have a certain angle in the area of the flanging, so that upon creating the pack of flaps and mounting it on the ducts, a constant and well controlled pace should exist between the flaps, the entire exchanger being evenly and thermally packaged so as to prevent some areas from being differently stressed.

The technical solutions of the Romanian invention proposal are known as Heat exchanger and the process of realizing thereof, by Kober company, deposit no. 2011 00445/09.05.2011, in which the heat exchanger is composed of a metal tube through which a liquid flows as agent that takes over the heat from the primary environment and from a series of metal flaps attached to it, all made of stainless steel, the metal tube being composed of straight duct sections, interconnected among them with return elements, on all these being mounted end elements for the connection to the thermal agent source, the duct on which the flaps are mounted by welding, or applied by casting if aluminium is used.

This type of heat exchanger presents the main disadvantages related to the manufacturing method, manpower being necessary to a large extent, as follows:
- making the exchanger from a continuous duct involves cold or hot bending operations and the welding at its ends of the thermal agent inlets and outlets;
- the performance of the exchanger by means of several straight duct sections, interconnected between them by return elements and liquid agent inlets and outlets, all assembled by welding;
- the insertion of the flaps on the duct, for the heat exchange requires holes that would allow their coating, with consequences on the precision of achieving the exchanger assembly.

The constructive solutions presented in the Canadian patent CA 2759525 A1 2010/10/28, respectively WO 2010/123249 and PCT/KR2010/002445, are known under the following designation: Method for braze-welding a fixing plate and a flow channel cap in a heat excanger, and heat exchanger produced by same .

The respective patent refers to the pre-assembly method for the purpose of brazing certain end collectors mounted on a heat exchanger composed of several ducts, opened at both ends, which present the following disadvantage:
- mounting the lid on the clamping plate is difficult, requiring its insertion on one side and pressing it on the other side, before brazing the parts.

The heat exchanger, according to the invention, eliminates the above disadvantage and has the following advantages:
- being made of stainless steel, has a disadvantageous heat exchanger coefficient as compared with those made of copper and aluminium, but the price of the stainless steel is much lower than the price of copper and aluminium;
- the geometrical shape of the flaps improves the thermal transmission following a drain line that would wash as good as possible the ducts and that would break the hot gas stream in order to be directed to the near vicinity of the exchanger ducts;
- the making of certain cut-outs that allow, by inserting certain syringes, applying the solder right on the surface of the tubes allowing them to flow through capillarity only in the clearance formed by thermal expansion between the ducts and the flanging of the flaps;
- the making of an angle between 86 and 89 degrees in the area of the flanging, so that upon creating the pack of flaps and mounting it on the ducts, a constant and well controlled pace should exist between the flaps, so that the entire exchanger would be evenly thermally packaged, without any areas of it being differently stressed;
- the making of an angle in the area where the solder is applied with the help of the two syringes, which has the role of imposing the alloy to preferably wash the perimeter of the duct upon the melting;
- the making of certain cut-outs and of certain eyelets within the elements that compose the collectors, which, by their construction, allow a very easy way of assembling. This means that it's not the insertion on one side and the pressure on the other that is required, but a simple pressure which practically ensures the same firm way of fixing the two parts that compose the collector before brazing;
- at the environmental temperature, the flaps have to be mounted on ducts by threading because, due to their geometric shape, the ducts and the flaps have different expansion directions, fact which leads to the emergence of a clearance during the heating for brazing, clearance which is filled by the solder through capillarity;
- upon making the collector assembly, due to the fact that the geometrical shape grants them the same type of expansion at the brazing temperature, a gap for filing with solder should be foreseen upon the pre-assembly, reason for which on one of the two parts adequate deformations have been foreseen.

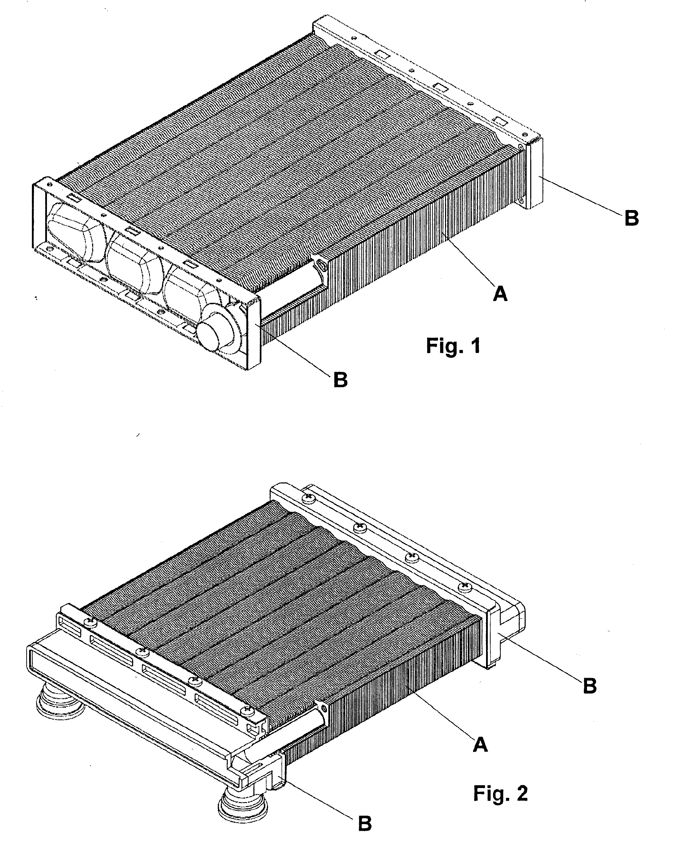

Hereinafter an example of embodiment of the invention is presented in connection with figures 1 ... 16, which represent:
- figure 1 - axonometric view of a heat exchanger assembly with the collection part and the connection with the boiler, all made of steel, preferably stainless steel, soldered between them by brazing;
- figure 2 - axonometric view of a heat exchanger assembly with the collection part made of composite plastic material and the connection with the gas boiler made by screws and sealing with O-rings made of heat resistant rubber;
- figure 3 - axonometric view of a heat exchanger assembly with two rows of ducts, with the collection part made of composite plastic material and the connection with the gas boiler made by screws and sealing with O-rings made of heat resistant rubber;
- figure 4 - top view of a heat exchanger assembly made of straight ducts, flaps (they are not fully represented by figures) and collector assemblies, made by brazing;
- figure 5 - section through the straight ducts of a heat exchanger assembly;
- figure 6 - section through the straight ducts of a heat exchanger assembly with baffles mounted on the interior;
- figure 7 - top view of the internal calibration mode with a broach of the duct;
- figure 8 - axonometric view of a flap 2a for circular and oval pipes placed on one row of a heat exchanger assembly;
- figure 9 - axonometric view of a flap 2b for circular pipes placed on one row of a heat exchanger assembly;
- figure 10 - axonometric view of a flap 2c, for two rows of circular pipes, the top row that provides the thermal energy directly from the fuel combustion, the bottom row that provides the thermal energy generated by the latent condensing heat;
- figure 11 - section through a device for applying the solder of the flaps on the pipes;
- figure 12 - the angles of the flaps for ensuring the clearance and pace between the flaps upon mounting and the ease of applying the soldering material upon brazing;
- figure 13 - axonometric view of a metal collector assembly which is fixed at the ends of the heat exchanger assembly pipes;
- figure 14 - axonometric view of an end part 3;
- figure 15 - section through a metal collector assembly;
- figure 16 - axonometric view of a collector assembly made of composite plastic material fixed with screws and sealed with O-rings made of heat resistant rubber.

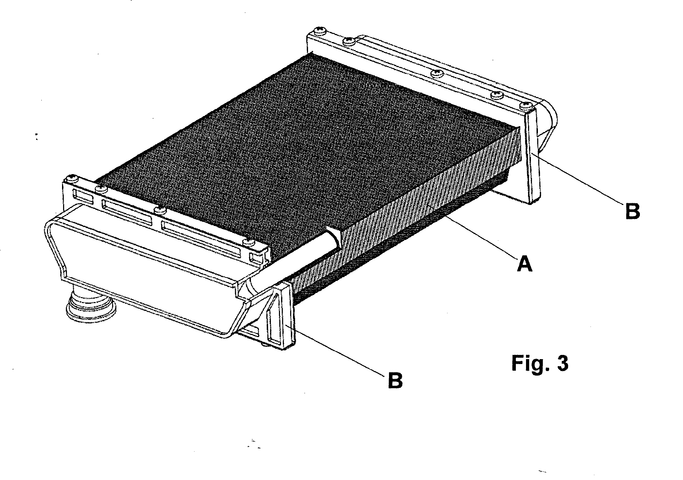

According to the invention, the heat exchanger is composed of two parts, a metal part **A,** figures 1, 2 and 3, which ensures the thermal exchange, and a collection part and connection with the gas boiler **B,** made of metal, figure 1 and of composite plastic, figures 2 and 3.

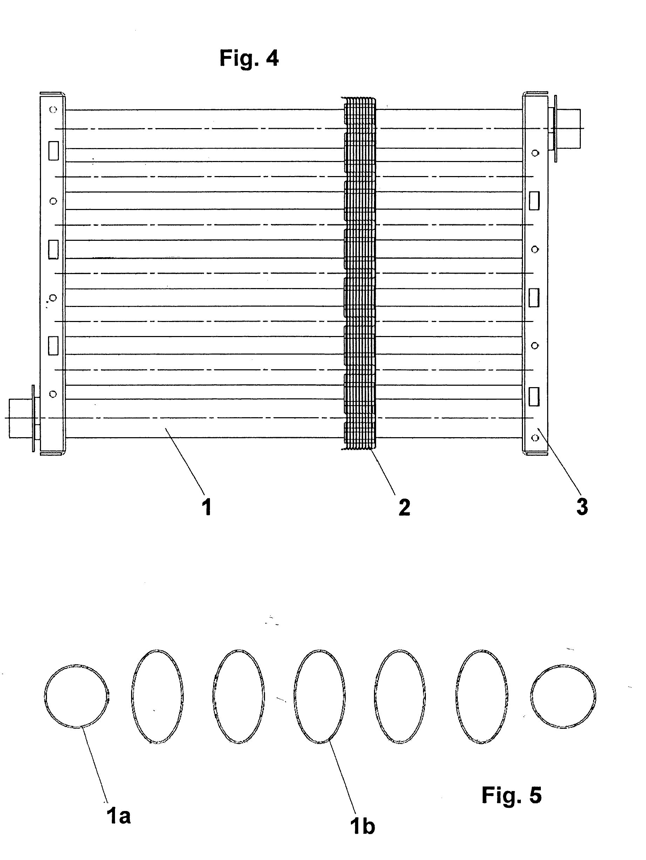

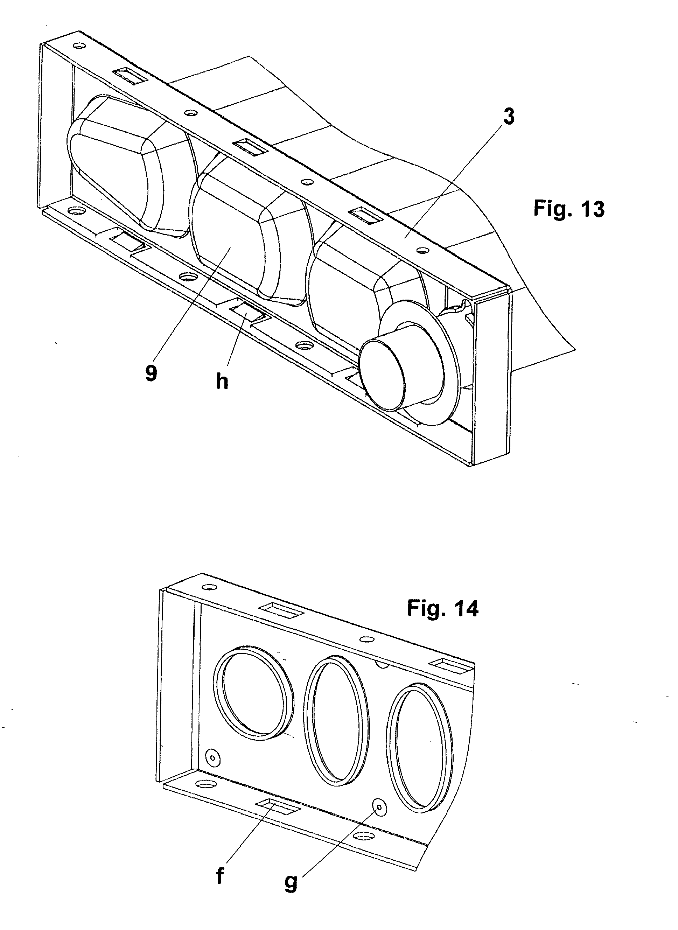

The heat exchange part is made, figure 4, of some straight pipes **1,** through which the thermal agent supplied by a gas boiler, not positioned, known in itself, circulates, pipes on which some flaps **2** are assembled, and the ends of the pipes are fixed to a collector assembly formed of an end part **3** and a metal collector **9** figure 13, all being assembled in one part by controlled atmosphere furnace brazing.

The two collector assemblies, figure 13, by their construction, ensure the circulation of the thermal agent between its inlet and outlet from the exchanger on pipes to successively opposed directions, extending the circuit route for a better heat exchange.

The pipes can have a circulation section, **1a** or oval **1b,** figure 5.

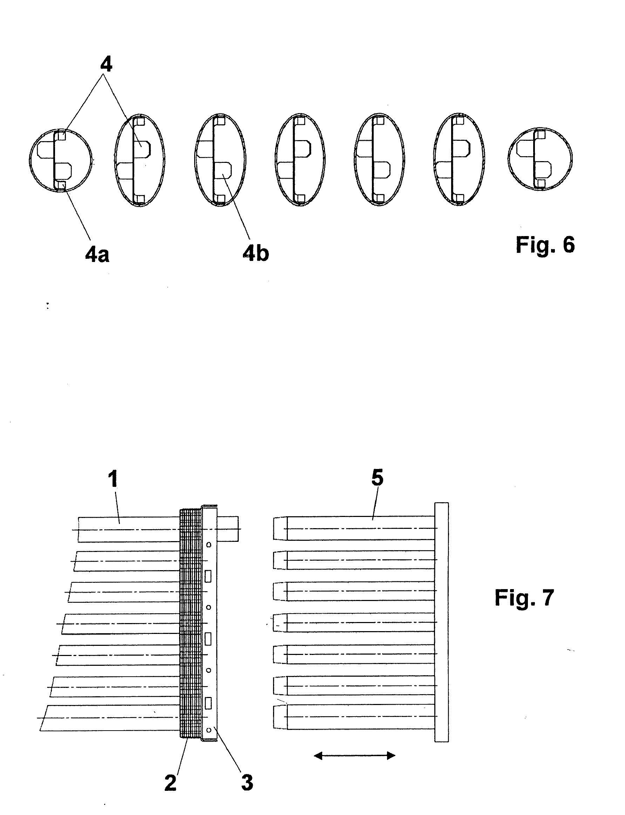

In order to increase the heat exchange with the environment, on the pipes **1** some baffles **4** are mounted, respectively **4a** for circular pipes and **4b** for oval pipes, figure 6, composed of tables with lengths approximately equal with the length of the pipes **1** which have flaps obtained by cut-out and deformation.

The pipes **1** have controlled sizes and by means of a device the flaps **2** are inserted on them, the brazing process assuming the existence of certain minimum distances between the exterior surfaces of the pipes and the interior surfaces of the flaps for the penetration of the solder.

Because, in the case of pipes, the thermal longitudinal expansion coefficient is much higher than the transversal expansion one, and in the case of the flaps the transversal expansion coefficient is much higher than the longitudinal one, at a brazing temperature of approximately 1,000°C, the minimum distance between the surfaces tends to increase. In order to eliminate this disadvantage, it is necessary that at the environmental temperature of about 20°C, between the flaps and the pipes a zero or negative clearance should exist, situation obtained by calibrating the inner sizes of the pipes **1** with a special tool, respectively a broach **5,** after mounting the flaps **2** and the end parts **3,** figure 7.

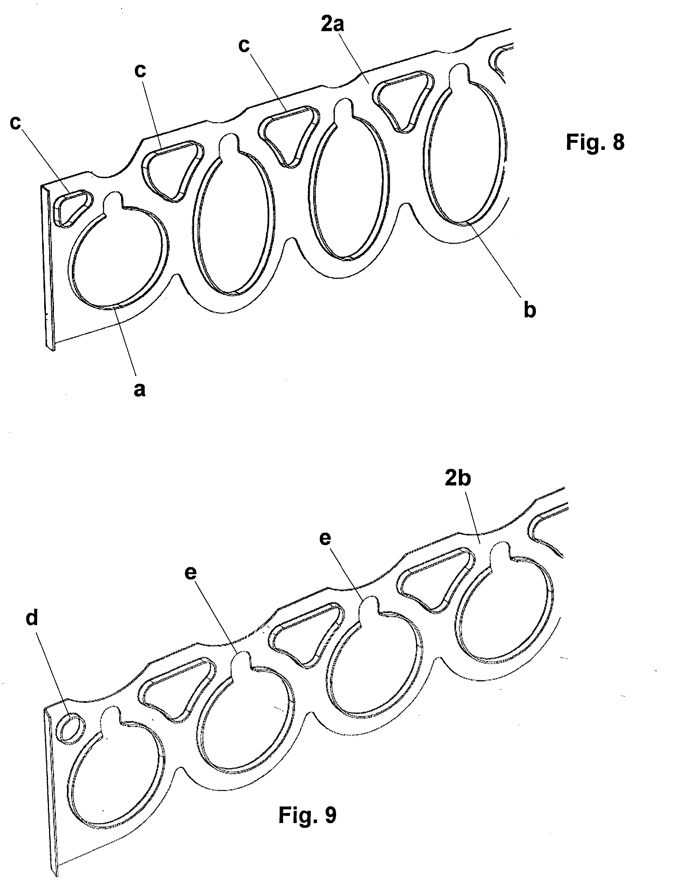

The flaps **2** have various shapes depending on their destination, such as the flaps **2a,** figure 8, for a heat exchanger with a single row of circular and oval pipes, for the use of the thermal energy generated upon the fuel combustion into a gas boiler.

The pipes are placed in the flaps by flanging: some flangings **a,** for circular pipes and some flangings **b,** figure 8 for oval pipes.

The flaps have flangings and cut-outs for an even thermal charge thus some triangular flangings are performed with rounded corners **c,** figure 8 and circular **d,** for the controlled drain of flue gas, figure 9, and for the application of the solder some cut-outs e are performed, figures 8, 9, 10.

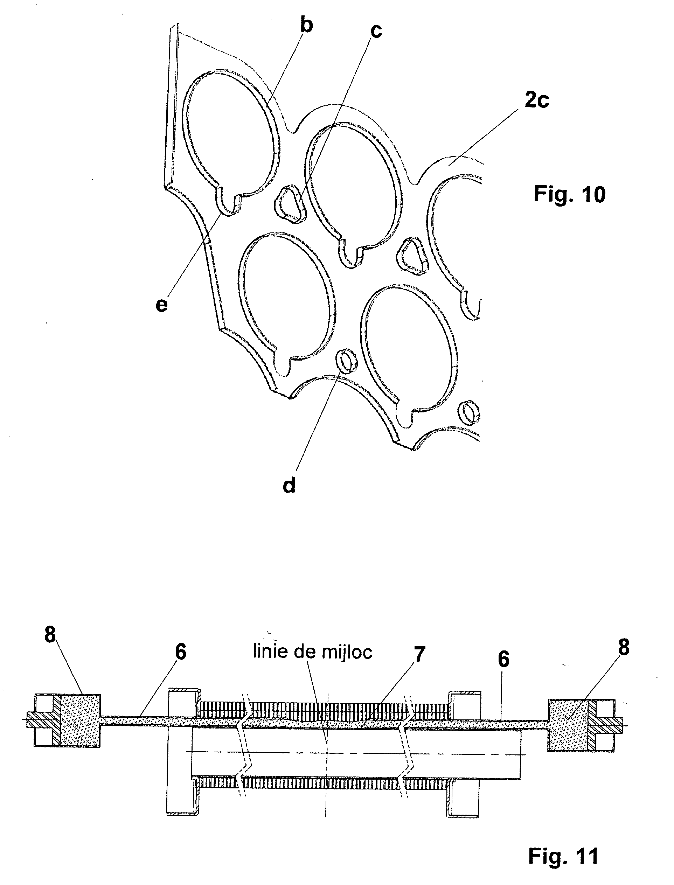

The placement of the pipes in the flaps is made on the flangings **b** of a flap 2a or 2c. For two circular pipes, the top row, provides the direct thermal energy generated by the fuel combustion, the bottom row, provides the thermal energy generated by the vaporization latent heat, figure 10.

In order to apply the solder through the cut-outs **e** a device is used, figure 11, composed of two parts with several syringes 6 on each side, equal with the number of pipes, on one half of the pipe's length covered by flaps, the solder being pushed on the pipes and respectively at the base of the flaps by some cylinders with piston 8, manually or hydraulically actuated.

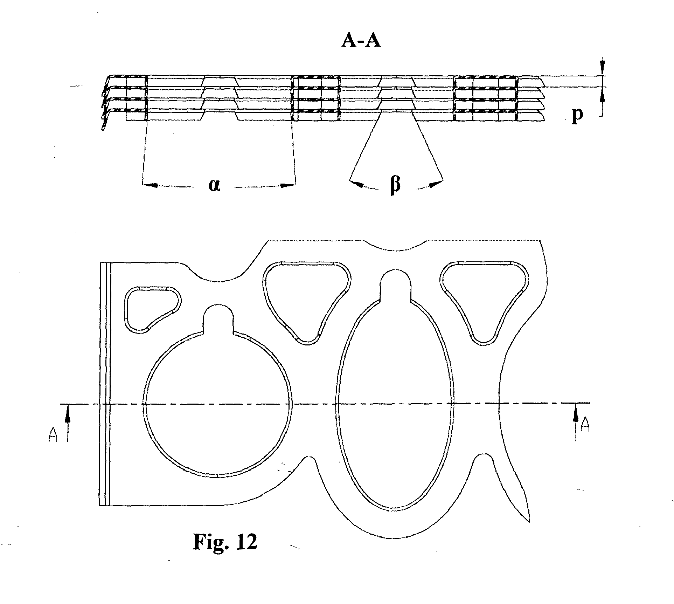

In order to ensure the clearance necessary for brazing with a pace **p** between the flaps, these, by cupping, have an angle α ranging between 86° and 89° and an angle β ranging between 45° and 50°, figure 12.

The heat exchanger assembly has the collection and connection part with the gas boiler realized by means of a collector assembly made of steel, preferably stainless steel, figure 13.

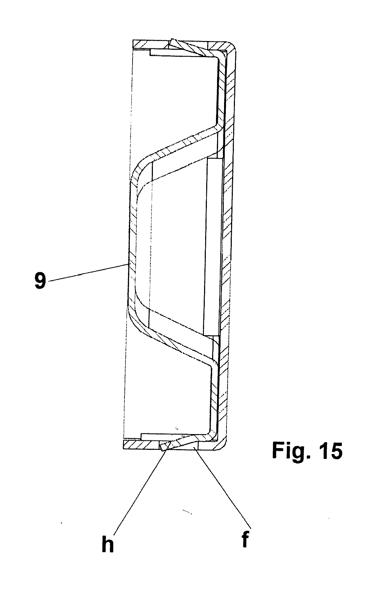

The collectors **9** are soldered with the end part **3,** in order to realize the collector assembly by brazing, which assumes the existence of a well-defined sized clearance, obtained by the execution of certain cut-outs **f,** of certain **g** pre-mouldings and of certain **h** bends, figures 14 and 15.

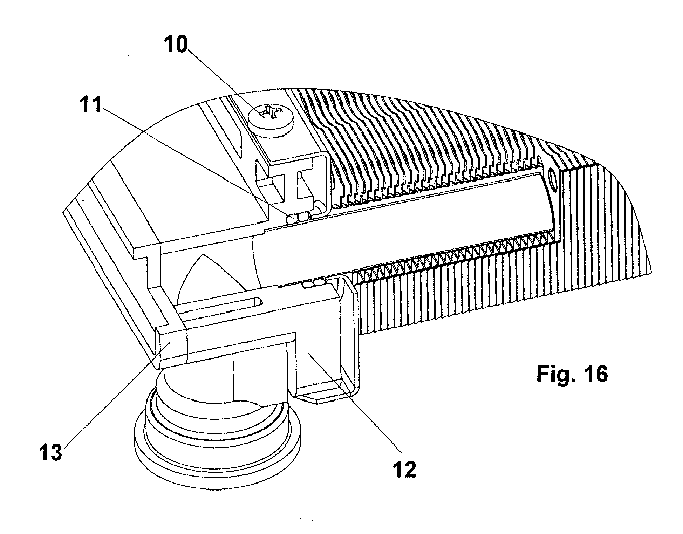

The collection and connection part with the gas boiler made of composite plastic material is attached on the heat exchanger part by means of certain screws **10** and is sealed with certain O-rings, **11,** the connection part formed of a collector **12** and of a lid **13** are soldered by brazing or welding in the contact area, figure 16.

## Claims

1. Gas-liquid heat exchanger, aimed for the thermal transmission from a primary environment, combustion fuel, hot flue gas supplier or from another source of hot gas, to a secondary environment, liquid, used for preparing the thermal agent necessary for heating and producing domestic hot water or for heating a passenger compartment. This heat exchanger can be used for wall hung boilers mainly with normal combustion, but which by overlapping and sealing of the heating chamber can be extended to the condensing boilers **characterized by the fact that** it is composed of two parts: one part **(A),** metallic, which ensures the heat exchange between the hot gas and the thermal agent and a part **(B)** of collection and connection with the gas boiler, which can be made of metal or composite plastic material.

2. Heat exchanger, according to claim 1, **characterised by the fact that the** metal part **(A)** is made of certain straight pipes **(1),** of circular or oval section, on which certain flaps **(2)** are assembled, and the end of the pipes are fixed at each collector assembly formed of the end parts **(3)** and the collectors **(9)** all assembled in one part.

3. Heat exchanger, according to claim 1, **characterized by the fact that** the two collector assemblies composed from the end parts **(3)** and collectors **(9),** by their construction, ensure the circulation of the thermal agent between the inlet and outlet from the exchanger on pipes to successively opposed directions, extending the circuit route for a better heat exchange.

4. Heat exchanger, according to claim 1, **characterized by the fact that** in order to increase the heat exchange between the hot gas and the thermal agent, on the pipes **(1) 1** some baffles **(4a)** are mounted for circular pipes and **(4b)** for oval pipes composed of plates with lengths approximately equal with the length of the pipes **(1).**

5. Heat exchanger, according to claim 1, **characterized by the fact that** the flaps **(2)** have different shapes according to their destination, thus some flaps **(2a)** are for one row of circular and oval pipes that use the thermal energy generated directly by the fuel combustion in a gas boiler, some flaps **(2c)** for two circular pipes, top row that provide thermal energy directly from the fuel combustion, bottom row, that provide thermal energy generated by the latent vaporisation heat.

6. Heat exchanger, according to claim 1, **characterized by the fact that** the positioning of the pipes in the flaps is made by their flanging, for the circular pipes some flangings **(a),** for oval pipes some flangings **(b).**

7. Heat exchanger, according to claim 1, **characterized by the fact that** the flaps have flangings and cut-outs for an even thermal charge, such triangular flangings have rounded corners **(c),** circular **(d),** ensuring the controlled flow of flue gas.

8. Heat exchanger, according to claim 1, **characterized by the fact that** the collection and connection part with the gas boiler made of composite plastic material is attached on the heat exchanger part by means of certain screws **(10)** and is sealed with certain O-rings **(11)** the connection part formed of a collector **(12)** and of a lid **(13)** are soldered by brazing or welding in the contact area.

9. The process of realizing of a heat exchanger **characterized by the fact that** the assembly formed of straights pipes **(1),** the flaps **(2)** and the two collector assemblies formed of the end parts **(3)** and collectors **(9),** are undemountable assembled by brazing in a controlled atmosphere furnace.

10. **The** process of realizing of a heat exchanger, according to claim 9, **characterized by the fact that** the flaps are made by cupping, ensuring an angle (α) ranging between 86° and 89° and an angle (β) ranging between 45° and 50°, in order to obtain a pace **(p)** which allows the rigorous assembly of the composing parts.

11. The process of realizing of a heat exchanger, according to claim 9, **characterized by the fact that** for the application of the solder by cut-outs **(e)** a device is used composed of two parts with several syringes **(6)** equal with the number of pipes, on one half of the pipe's length covered by flaps, the solder being pushed on the pipes and respectively applied at the base of the flaps by some cylinders with piston **(8),** manually or hydraulically actuated.
